# EUROPEAN PATENT SPECIFICATION

(11) **EP 0 484 665 B1**
(45) Date of publication and mention of the grant of the patent: **13.12.1995**
(21) Application number: 91116143.8
(22) Date of filing: 23.09.1991
(51) Int. Cl.: G01B 9/00, H01L 21/66

(54) **Pattern shift measuring method**
Musterverschiebungsmessmethode
Méthode de mesure du décalage du specimen

(30) Priority: 31.10.1990 JP 296977/90
(43) Date of publication of application: 13.05.1992
(73) Proprietor: SHIN-ETSU HANDOTAI COMPANY LIMITED, Chiyoda-ku Tokyo (JP)
(72) Inventor: Miki, Katsuhiko, Shin-Etsu Handotai, C. H. No. 207, Nishishirakawa-gun, Fukushima-ken (JP)
(74) Representative: Grünecker, Kinkeldey, Stockmair & Schwanhäusser Anwaltssozietät

(56) References cited:
- EP-A- 0 013 729
- EP-A- 0 316 624
- EP-A- 0 352 004
- GB-A- 2 147 411
- US-A- 4 363 962

## Description

The invention relates to a method of estimating a shift between a diffusion pattern on a semiconductor wafer and a pattern on an epitaxial layer thereof after an epitaxial process, and more particularly to a method of estimating the pattern shift without destroying the semiconductor wafer and in a short period of time.

It is essential to control the shift of a buried diffusion pattern after growth of an epitaxial layer in a bipolar transistor in an IC. For this purpose, the growth conditions (such as reaction temperature and reaction speed) should be always controlled to assure constant pattern shift. However, it is very difficult to strictly control the growth conditions since frequent measurement of the pattern shift is inevitable.

Conventionally, the angular lapping stain method is used for this purpose. This method comprises: (1) slicing chips having a buried layer in parallel to and perpendicular to the orientation flat by using a dicing saw; (2) angular polishing of optional surfaces of the sliced tips ( ϑ=11° 32'); (3) etching the polished surfaces (Sirtl, 2 to 3 seconds); and (4) measuring the shift of the patterns of the buried layers by using differential, interference micrographs (x 150).$\text{The pattern shift factor is obtained by the following equation: the pattern shift factor = the amount of shift (micrometer)/the thickness of the epitaxial layer (micrometer).}$

However, since it takes approximately 2 hours to measure the pattern shift and requires destruction of specimens, this conventional method cannot be used so frequently and is rather expensive.

To solve the problem of the conventional method, some proposals were made to perform the pattern shift measurement through non destructive tests as disclosed in such publications as Japanese Patent Laid Open Publications 64-31 413 and 64-31 414. In the method described in the first mentioned document, a substrate disposed in a vacuum epitaxial device is charged with a dummy substrate on it and when epitaxial growth is performed, a part with an epitaxial layer as well as a part without the epitaxial layer are formed on the substrate. A positive type resist is coated on the semiconductor substrate where epitaxial growth is performed on the other side surface and mask alignment is carried out with a mask which is used in the case of formation of buried layer at the part where epitaxial growth is not performed and the above part is exposed and also it is developed. Patterns of the resist remain on the buried layer and they are formed at a position which has been held prior to epitaxial growth even in the part where epitaxial growth has been performed. Thus the relation of positions between the pattern of the buried layer located at the part where epitaxial growth has been performed and the pattern of the resist are measured. In a method known from second document 64-31 414 fine patterns are put in a semiconductor substrate and epitaxial growth is performed. Observing forms including the directions of the patterns where growth has been performed, the presence of any abnormality of the shift of the patterns is judged from the presence of abnormality regarding their formation. Thus, inspection of the shift of the patterns during epitaxial growth which is performed towards the semiconductor substrate can be carried out only by observing the surfaces without destroying the semiconductor substrate.

Under the present circumstances, there is a great demand for a more simplified and reliable method of measuring the pattern shift.

It is therefore an object of this invention to provide a method of reliably measuring the pattern shift of a semiconductor wafer in a short period of time without destroying the semiconductor wafer.

This object is achieved by the features as set forth in the independent claim 1.

According to this invention, the pattern shift can be determined only by measuring the line width of a linear pattern vertical to the orientation flat and/or by measuring the line width of a linear pattern parallel to the orientation flat.

According to this invention, the pattern shift can be reliably and inexpensively measured in about five minutes without destroying the semiconductor wafers.

Many other objects, advantages and features of the present invention will be better understood from the following description taken in conjunction with the accompanying drawings.
FIG. 1 shows a correlation between a ratio W_{V}/W_{H} obtained by the method of this invention and a pattern shift ratio obtained by the conventional method;
FIG. 2 shows a correlation between W_{V} of this invention and the pattern shift ratio determined by the conventional method; and
FIG. 3 shows a correlation between W_{H} of this invention and the pattern shift ratio determined by the conventional method.

One embodiment of this invention will now be described with reference to the accompanying drawings.

Measurement was performed under the following conditions:
Specimens; CZ p-type semiconductor wafer 〈111〉 off-angle 3° 30' in 〈112〉 100φ, 10-20Ω-cm, OF〈110〉
Buried diffusion layer; Sb, 15Ω/□, depth 8mm
Width of the buried diffusion layer; 60 »m
Epitaxial layer growth; 10 »m, 1Ω-cm
Reaction furnaces used; Cylindrical and vertical furnaces
Reaction temperatures; 1150, 1100 and 1050°C
Reaction speeds; 0.30 and 0.60 »m /min
Reaction pressure; 760 Torr
Measurement; A Nomarski differential microscopic interferometer (magnification factor, x200) was used to measure the line width (W_{V}) of a pattern vertical to the OF(orientation flat), and the line width (W_{H}) of a pattern parallel to the OF. The measured values and the ratio W_{V}/W_{H} are shown in Table 1.

**TABLE 1**

| Furnace type | Reaction temperature (°C) | Reaclion speed »m/min | pattern shift ratio | W_{V} (»m) | W_{H} (»m) | W_{V}/W_{H} |
|---|---|---|---|---|---|---|
| Vertical furnace | 1150 | 0.30 | 0.594 | 61.9 | 63.2 | 0.98 |
| | do. | 0.54 | 0.900 | 61.9 | 63.9 | 0.97 |
| | 1100 | 0.30 | 0.986 | 61.3 | 65.2 | 0.94 |
| | do. | 0.53 | 1.11 | 60.6 | 66.5 | 0.91 |
| | 1050 | 0.30 | 1.32 | 58.7 | 69.1 | 0.85 |
| | do. | 0.53 | 1.32 | 56.7 | 68.5 | 0.83 |
| Cylindrical furnace | 1150 | 0.25 | 0.98 | 61.9 | 63.9 | 0.97 |
| | do. | 0.56 | 1.23 | 60.6 | 65.9 | 0.92 |
| | 1100 | 0.28 | 1.35 | 60.6 | 67.8 | 0.89 |
| | do. | 0.57 | 1.48 | 58.7 | 69.8 | 0.84 |
| | 1050 | 0.30 | 2.11 | 54.8 | 70.4 | 0.78 |
| | do. | 0.58 | 2.01 | 56.7 | 70.4 | 0.81 |
| W_{V}/W_{H} = Line width (W_{V}) vertical to OF〈110〉/Line width (W_{H}) parallel to OF〈110〉 | | | | | | |

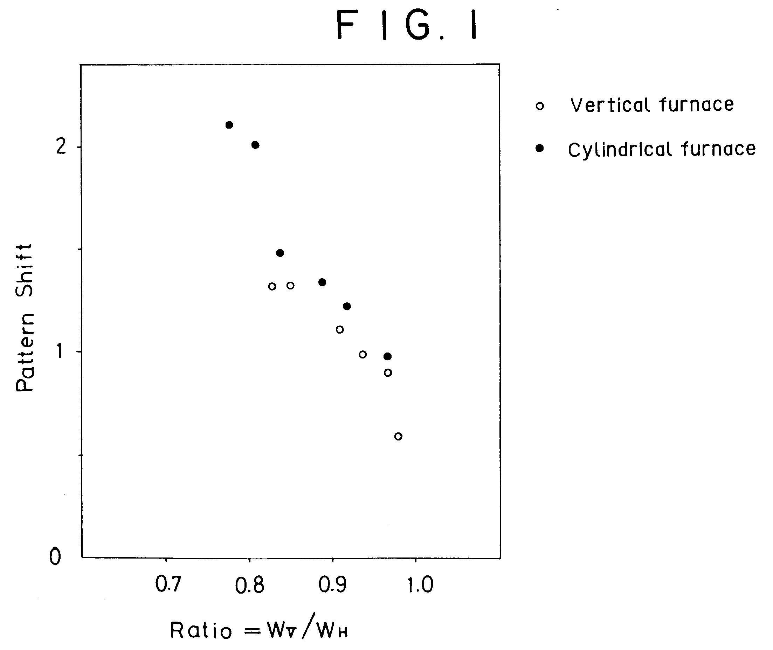

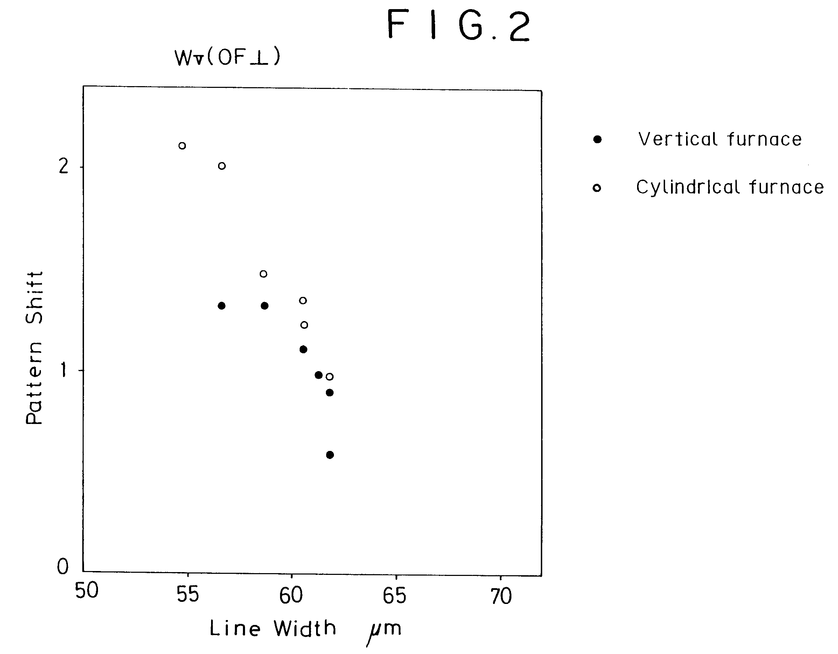

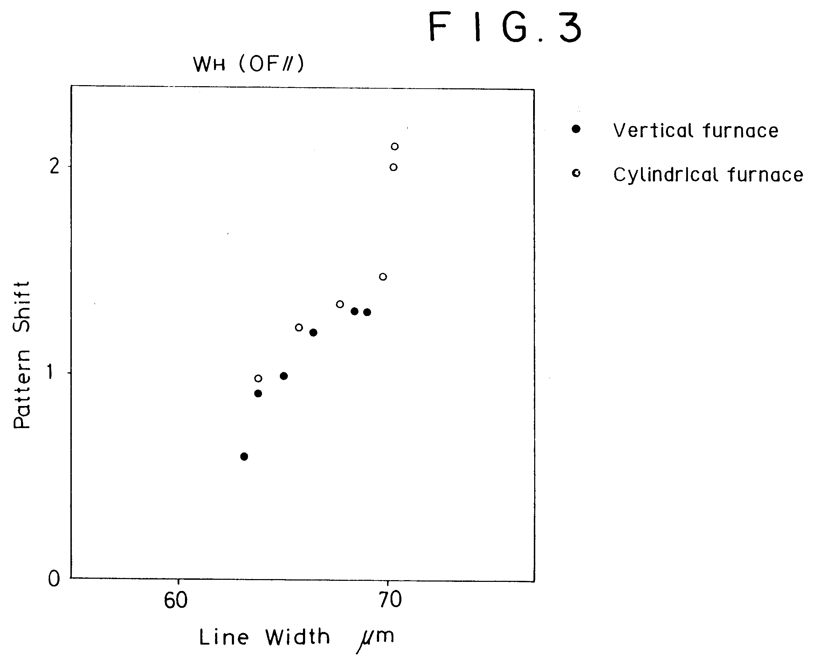

FIGS. 1 to 3 are graphs showing the correlation between the pattern shift ratios determined by the conventional method (angular lapping stain method), and the values W_{V} /W_{H} , W_{V} and W_{H} determined by the method of this invention.

Any of W_{V}/W_{H}, W_{V} and W_{H} have correlations to the pattern shift ratio of the conventional method (W_{V}/W_{H} and W_{V} have negative correlations and W_{H} has a positive correlation to the conventional pattern shift ratio). It was confirmed that the pattern shift can be determined by measuring W_{V}/W_{H} , and W_{V} or W_{H} .

In this embodiment, the buried diffusion layer is antimony (Sb). The method of this invention is also applicable to buried diffusion layers of impurities such as boron (B), phosphorous (P) and arsenic (As).

According to this invention, it is possible to measure the pattern shift of the epitaxial semiconductor wafer in a short period of time without destroying the wafer. Therefore, measurement can be performed very frequently so that the growth conditions can be always kept optimum.

## Claims

1. A method of estimating a shift between a diffusion pattern on a semiconductor wafer and a pattern on an epitaxial layer thereof after an epitaxial process, said method comprising the steps of:
measuring a line width of a linear pattern on the epitaxial layer vertical to an orientation flat; and/or measuring a line width of a linear pattern on the epitaxial layer parallel to the orientation flat; and
estimating the shift based on the line width of the linear pattern or the line widths of the linear patterns.

2. A method of estimating a shift between a diffusion pattern on a semiconductor wafer and a pattern on an epitaxial layer thereof after an epitaxial process according to claim 1, wherein said method comprises the steps of:
predetermining the correlation between the pattern shift ratio and a line width of a linear pattern on the epitaxial layer vertical to an orientation flat;
measuring a line width of a linear pattern on the epitaxial layer vertical to the orientation; and estimating the shift based on the predetermined correlation and the measured line width.

3. A method of estimating a shift between a diffusion pattern on a semiconductor wafer and a pattern on an epitaxial layer thereof after an epitaxial process according to claim 1, wherein said method comprises the steps of:
predetermining the correlation between the pattern shift ratio and a line width of a linear pattern on the epitaxial layer parallel to an orientation flat;
measuring a line width of a linear pattern on the epitaxial layer parallel to an orientation flat; and estimating the shift based on the predetermined correlation and the measured line width.

4. A method of estimating a shift between a diffusion pattern on a semiconductor wafer and a pattern on an epitaxial layer thereof after an epitaxial process according to claim 1, wherein said method comprises the steps of:
predetermining the correlation between the pattern shift ratio and a ratio between the line width of a linear pattern on the epitaxial layer vertical to an orientation flat and the line width of a linear pattern on the epitaxial layer parallel to the orientation flat;
measuring a line width of a linear pattern on the epitaxial layer vertical to the orientation flat;
measuring a line width of a linear pattern on the epitaxial layer parallel to an orientation flat;
calculating the ratio between the measured line widths; and estimating the shift based on the predetermined correlation and the ratio between the measured line widths.

5. A method of estimating a shift between a diffusion pattern on a semiconductor wafer and a pattern on an epitaxial layer thereof after an epitaxial process according to claim 1, wherein a microscopic interferometer is used to measure a line width of a linear pattern on the epitaxial layer.

## Patentansprüche

1. Ein Verfahren zum Abschätzen einer Verschiebung zwischen einem Diffusionsmuster auf einem Halbleiterwafer und einem Muster auf einer epitaxialen Schicht nach ihrem epitaxialen Prozeß, wobei das Verfahren die Schritte umfaßt:
Messen einer Linienbreite eines linearen Musters auf der epitaxialen Schicht vertikal zu einer Orientierungsebene; und/oder Messen einer Linienbreite eines linearen Musters auf der epitaxialen Schicht parallel zu der Orientierungsebene; und
Abschätzen der Verschiebung basierend auf der Linienbreite des linearen Musters oder der Linienbreiten der linearen Muster.

2. Ein Verfahren zum Abschätzen einer Verschiebung zwischen einem Diffusionsmuster auf einem Halbleiterwafer und einem Muster auf einer epitaxialen Schicht nach ihrem epitaxialen Prozeß, gemäß Anspruch 1, wobei das Verfahren die Schritte umfaßt:
Vorbestimmen der Korrelation zwischen dem Musterverschiebungsverhältnis und einer Linienbreite eines linearen Musters auf der epitaxialen Schicht vertikal zu einer Orientierungsebene;
Messen einer Linienbreite eines linearen Musters auf der epitaxialen Schicht vertikal zu der Orientierungsebene; und
Abschätzen der Verschiebung basierend auf der vorbestimmten Relation und der gemessenen Linienbreite.

3. Ein Verfahren zum Abschätzen einer Verschiebung zwischen einem Diffusionsmuster auf einem Halbleiterwafer und einem Muster auf einer epitaxialen Schicht nach ihrem Epitaxieprozeß nach Anspruch 1, wobei das Verfahren die Schritte umfaßt:
Vorbestimmen der Korrelation zwischen dem Musterverschiebungsverhältnis und einer Linienbreite eines linearen Musters auf der epitaxialen Schicht parallel zu einer Orientierungsebene;
Messen einer Linienbreite eines linearen Musters auf der epitaxialen Schicht parallel zu einer Orientierungsebene; und
Abschätzen der Verschiebung basierend auf der vorbestimmten Relation und der gemssenen Linienbreite.

4. Ein Verfahren zum Abschätzen einer Verschiebung zwischen einem Diffusionsmuter auf einem Halbleiterwafer und einem Muster auf einer epitaxialen Schicht nach ihrem epitaxialen Prozeß nach Anspruch 1, wobei das Verfahren die Schritte umfaßt:
Vorbestimmen der Korrelation zwischen dem Musterverschiebungsverhältnis und einem Verhältnis zwischen der Linienbreite eines linearen Musters auf der epitaxialen Schicht vertikal zu einer Orientierungsebene und der Linienbreite eines linearen Musters auf der epitaxialen Schicht parallel zu der Orientierungsebene;
Messen einer Linienbreite eines linearen Musters auf der epitaxialen Schicht vertikal zur der Orientierungsebene;
Messen einer Linienbreite eines linearen Musters auf der epitaxialen Schicht parallel zu einer Orientierungsebene;
Berechnen des Verhältnisses zwischen den gemessenen Linienbreiten; und
Abschätzen der Verschiebung basierend auf der vorbestimmten Korrelation und dem Verhältnis zwischen den gemessenen Linienbreiten.

5. Ein Verfahren zum Abschätzen einer Verschiebung zwischen einem Diffusionsmuster auf einem Halbleiterwafer und einem Muster auf einer epitaxialen Schicht nach ihrem Epitaxieprozeß nach Anspruch 1, wobei ein mikroskopisches Interferometer verwendet wird, um eine Linienbreite des linearen Musters auf der epitaxialen Schicht zu messen.

## Revendications

1. Procédé d'estimation d'un décalage entre un motif de diffusion sur une tranche de semiconducteur et un motif sur une couche épitaxiale de cette tranche de semiconducteur après un procédé épitaxial, ledit procédé comprenant les étapes de :
mesure d'une grosseur de ligne d'un motif linéaire sur la couche épitaxiale, perpendiculairement à un plan d'orientation;
et/ou mesure d'une grosseur de ligne d'un motif linéaire sur la couche épitaxiale, parallèlement au plan d'orientation; et
estimation du décalage sur la base de la grosseur de ligne du motif linéaire ou des grosseurs linéaires des motifs linéaires.

2. Procédé d'estimation d'un décalage entre un motif de diffusion sur une tranche de semiconducteur et un motif sur une couche épitaxiale de cette tranche de semiconducteur après un procédé épitaxial selon la revendication 1, dans lequel ledit procédé comprend les étapes de :
prédétermination de la corrélation entre la valeur de décalage de motif et une grosseur de ligne d'un motif linéaire sur la couche épitaxiale, perpendiculairement à un plan d'orientation;
mesure d'une grosseur de ligne d'un motif linéaire sur la couche épitaxiale, perpendiculairement au plan d'orientation; et
estimation du décalage sur la base de la corrélation prédéterminée et de la grosseur de ligne mesurée.

3. Procédé d'estimation d'un décalage entre un motif de diffusion sur une tranche de semiconducteur et un motif sur une couche épitaxiale de cette tranche de semiconducteur après un procédé épitaxial selon la revendication 1, dans lequel ledit procédé comprend les étapes de :
prédétermination de la corrélation entre la valeur de décalage de motif et une grosseur de ligne d'un motif linéaire sur la couche épitaxiale, parallèlement à un plan d'orientation;
mesure d'une grosseur de ligne d'un motif linéaire sur la couche épitaxiale, parallèlement à un plan d'orientation; et
estimation du décalage sur la base de la corrélation prédéterminée et de la grosseur de ligne mesurée.

4. Procédé d'estimation d'un décalage entre un motif de diffusion sur une tranche de semiconducteur et un motif sur une couche épitaxiale de cette tranche de semiconducteur après un procédé épitaxial selon la revendication 1, dans lequel ledit procédé comprend les étapes de :
prédétermination de la corrélation entre la valeur de décalage de motif et un rapport de la grosseur de ligne d'un motif linéaire sur la couche épitaxiale, perpendiculairement à un plan d'orientation sur la grosseur de ligne d'un motif linéaire sur la couche épitaxiale, parallèlement au plan d'orientation;
mesure d'une grosseur de ligne d'un motif linéaire sur la couche épitaxiale, perpendiculairement au plan d'orientation;
mesure d'une grosseur de ligne d'un motif linéaire sur la couche épitaxiale, parallèlement à un plan d'orientation;
calcul du rapport des grosseurs de ligne mesurées; et
estimation du décalage sur la base de las corrélation prédéterminée et du rapport des grosseurs de ligne mesurées.

5. Procédé d'estimation d'un décalage entre un motif de diffusion sur une tranche de semiconducteur et un motif sur une couche épitaxiale de cette tranche de semiconducteur après un procédé épitaxial selon la revendication 1, dans lequel un interféromètre microscopique est utilisé pour mesurer une grosseur de ligne d'un motif linéaire sur la couche épitaxiale.
